# EUROPÄISCHE PATENTANMELDUNG

(11) **EP 3 785 892 A1**
(43) Veröffentlichungstag der Anmeldung: **03.03.2021**
(21) Anmeldenummer: 20189612.3
(22) Anmeldetag: 05.08.2020
(51) Int. Cl.: B29D 30/00, G06K 19/077, B65H 37/00

(54) **VERFAHREN UND VORRICHTUNG ZUM ABLÖSEN EINES AUF EINER TRÄGERFOLIE BEREITGESTELLTEN BAUTEILS VON DER TRÄGERFOLIE**

(30) Priorität: 02.09.2019 DE 102019213183
(71) Anmelder: Continental Reifen Deutschland GmbH, 30165 Hannover (DE)
(72) Erfinder: Scheppelmann, Torben, 30419 Hannover (DE)
(74) Vertreter: Continental Corporation

(57) **Zusammenfassung**

Die Erfindung betrifft ein Verfahren zum Ablösen eines auf einer Trägerfolie (1) bereitgestellten Bauteils (2) von der Trägerfolie (1), bei welchem die Trägerfolie (1) mit dem Bauteil (2) über eine Ablösekante (3) in einem Winkel von mehr als 90° in einer Förderrichtung (F) gefördert wird, wobei das Bauteil (2) von der Trägerfolie (1) abgelöst und getrennt von der Trägerfolie (1) abgeführt wird, wobei die Förderung der Trägerfolie (1) in einer vorbestimmten Position des auf der Trägerfolie (1) befindlichen Bauteils (2) vor der Ablösekante (3) gestoppt und die Trägerfolie (1) vor und hinter der Ablösekante (3) fixiert wird und anschließend die Ablösekante (3) entgegen der Förderrichtung (F) der Trägerfolie (1) verlagert wird, während das Bauteil (2) in seiner Position fixiert und von der Trägerfolie (1) abgelöst wird. Es wird ferner auch eine entsprechende Vorrichtung angegeben.

## Beschreibung

Die Erfindung betrifft ein Verfahren zum Ablösen eines auf einer Trägerfolie bereitgestellten Bauteils von der Trägerfolie, bei welchem die Trägerfolie mit dem Bauteil über eine Ablösekante in einem Winkel von mehr als 90° in einer Förderrichtung gefördert wird, wobei das Bauteil von der Trägerfolie abgelöst und getrennt von der Trägerfolie abgeführt wird.

Derartige Verfahren sind bekannt und werden zur Separierung von Bauteilen, etwa RFID-Tags von der Trägerfolie vielfältig eingesetzt. Die RFID-Tags können beispielsweise mit Gummi laminiert sein, wenn sie dazu bestimmt sind, in einen Reifen während dessen Herstellung eingebracht zu werden, um beispielsweise Informationen über Produkteigenschaften und/oder Produktherkunft auslesbar zu speichern. Beim Umlenken der Trägerfolie über die Ablösekante in einem scharfen Winkel von mehr als 90° löst sich der RFID-Tag von der Trägerfolie ab und wird durch den üblicherweise kontinuierlichen Folienvorschub auf einen sich direkt hinter der Kante befindlichen Übergabetisch geschoben. Durch dieses Aufschieben des RFID-Tags auf den Übergabetisch kann sich dieser in seiner Ausrichtung leicht verschieben und somit die gewünschte Positionsgenauigkeit, die er ursprünglich auf der Trägerfolie hatte, verlieren. Dies ist außerordentlich unerwünscht, da ein solcher laminierter RFID-Tag zum Zwecke des Einbringens in einen Reifen oder ein Reifenbauteil mit einer sehr hohen Positionsgenauigkeit appliziert werden muss.

Aufgabe der Erfindung ist es, ein Verfahren und eine Vorrichtung zum Ablösen eines auf einer Trägerfolie bereitgestellten Bauteils von der Trägerfolie vorzuschlagen, welche bei geringem baulichen Aufwand eine hochpräzise und positionsgenaue Ablösung und Übergabe des Bauteils von der Trägerfolie an eine nachgeordnete Weiterverarbeitungs- bzw. Applikatoreinheit für das Bauteil gewährleistet.

Zur Lösung der gestellten Aufgabe wird erfindungsgemäß die Ausgestaltung eines Verfahrens gemäß den Merkmalen des Patentanspruchs 1 vorgeschlagen.

Eine erfindungsgemäße Vorrichtung zur Lösung der gestellten Aufgabe ist Gegenstand des Patentanspruchs 9.

Vorteilhafte Ausgestaltungen und Weiterbildungen der Erfindung sind Gegenstand der abhängigen Ansprüche.

Die erfindungsgemäße Lösung sieht vor, dass die Förderung der Trägerfolie in einer vorbestimmten Position des auf der Trägerfolie befindlichen Bauteils vor der Ablösekante gestoppt und die Trägerfolie vor und hinter der Ablösekante fixiert wird und anschließend die Ablösekante entgegen der Förderrichtung der Trägerfolie verlagert wird, während das Bauteil in seiner Position fixiert und von der Trägerfolie abgelöst wird.

Erfindungsgemäß wird somit wie im Stand der Technik die Trägerfolie, auf der sich das Bauteil befindet, über eine Ablösekante in einem Winkel von mehr als 90° in der Förderrichtung gefördert. Allerdings wird die Förderung bzw. der Vorschub der Trägerfolie mit dem darauf befindlichen Bauteil in einer Position gestoppt, in der sich das auf der Trägerfolie befindliche Bauteil noch vor der Ablösekante befindet, d. h. noch nicht von der Trägerfolie gelöst ist. Die Trägerfolie wird sodann vor und hinter der Ablösekante fixiert, um die Folienspannung zwischen den beiden Fixierungen aufrechtzuerhalten. Sodann wird zum Lösen des Bauteils von der Trägerfolie die Ablösekante entgegen der Förderrichtung verlagert und somit die über die Ablösekante gespannte Trägerfolie entgegen der Förderrichtung unter dem Bauteil hindurch von diesem abgezogen. Das Bauteil selbst wird während dieses Abziehvorgangs jedoch nicht bewegt, vielmehr wird es in seiner Position fixiert und in dieser Position gehalten. Somit kann die ursprünglich auf der Trägerfolie vorgesehene exakte Positionierung und Orientierung des Bauteils beim Abziehen der Trägerfolie nicht verloren gehen.

Im Anschluss kann das in der Position fixierte und gehaltene Bauteil in der exakt gewünschten Ausrichtung appliziert oder weiterverarbeitet werden.

Bei dem Bauteil kann es sich prinzipiell um jedes beliebige auf einer Trägerfolie bereitgestellte Bauteil handeln, besonders bevorzugt handelt es sich jedoch um einen gummierten RFID-Tag, der zum Einbringen in einen Reifen bzw. ein Reifenbauteil vorgesehen ist.

Nach einem Vorschlag der Erfindung wird die Ablösekante um einen solchen Längenabschnitt entgegen der Förderrichtung verlagert, der mindestens der Länge des Bauteiles entspricht.

Nach einem weiteren Vorschlag der Erfindung wird die Trägerfolie anschließend an die Ablösekante über eine Umlenkrolle geführt, die gemeinsam mit der Ablösekante verlagert wird und die Trägerfolie wird einerseits in Förderrichtung betrachtet vor der Ablösekante und andererseits hinter der Umlenkrolle fixiert, während die Ablösekante sowie die Umlenkrolle entgegen der Förderrichtung zum Abziehen der Trägerfolie vom fixierten Bauteil verlagert werden.

Hierbei kann insbesondere vorgesehen sein, dass die Trägerfolie von der Umlenkrolle parallel zu dem Verlauf der Trägerfolie vor der Ablösekante geführt wird, wodurch die Präzision des Ablösens weiter gesteigert wird.

Die Fixierung der Trägerfolie vor und hinter der Ablösekante kann nach einem weiteren Vorschlag der Erfindung durch Einklemmen der Trägerfolie zwischen Klemmbacken bewirkt werden, die beispielsweise pneumatisch betätigt werden und eine vorübergehende, vorzugsweise taktweise Klemmung und Freigabe der Trägerfolie bewirken.

Im Sinne der Erfindung ist insbesondere vorgesehen, dass eine Vielzahl von Bauteilen aufeinanderfolgend auf der Trägerfolie bereitgestellt werden und sukzessive einzeln von der Trägerfolie abgelöst werden. Zu diesem Zweck wird nach dem vorangehend erläuterten Ablösen eines Bauteiles die Fixierung der Trägerfolie wieder aufgehoben und die Ablösekante, gegebenenfalls gemeinsam mit der Umlenkrolle, in Förderrichtung wieder in die ursprüngliche Position vorverlagert, sodass nach Abführen des abgelösten Bauteils der Vorgang von neuem beginnen kann und das nächste nachfolgende Bauteil durch Vorschub der Trägerfolie in die vorbestimmte Position gebracht werden kann.

Die Fixierung des Bauteils in der vorbestimmten Position kann beispielsweise mittels eines Saugers bewirkt werden, der das Bauteil durch anliegenden Unterdruck ansaugt und ortsfest positioniert, bis zum Beispiel zum Zwecke des Applizierens oder Weiterverarbeitens der Unterdruck aufgehoben und das Bauteil abgegeben wird.

Die erfindungsgemäße Vorrichtung zum Ablösen eines auf einer Trägerfolie bereitgestellten Bauteils von der Trägerfolie umfasst Fördermittel zum Zuführen der Trägerfolie mit dem darauf befindlichen Bauteil in einer Förderrichtung und eine Ablösekante mit einem Winkel von mehr als 90°, über die die Trägerfolie von den Fördermitteln in der Förderrichtung führbar ist, um das Bauteil von der Trägerfolie abzulösen. Erfindungsgemäß wird vorgesehen, dass eine Erfassungseinrichtung zum Erfassen einer vorbestimmbaren Position des auf der Trägerfolie befindlichen Bauteils vor der Ablösekante vorgesehen ist und vor sowie hinter der Ablösekante Fixierungsmittel zum Fixieren der Trägerfolie angeordnet sind, der vorbestimmbaren Position eine Fixierungseinrichtung zur Fixierung des Bauteils zugeordnet ist und die Ablösekante entgegen der Förderrichtung verlagerbar ist, dergestalt, dass bei Erfassung der vorbestimmbaren Position des Bauteils mittels Erfassungseinrichtung die Fördermittel anhaltbar, die Trägerfolie und das Bauteil fixierbar und die Ablösekante entgegen der Förderrichtung verlagerbar ist, um das Bauteil von der Trägerfolie abzulösen.

Die Ablösekante ist beispielsweise an einem entsprechenden Ablösetisch vorgesehen, über welchen die Trägerfolie zunächst mit dem darauf befindlichen Bauteil und an die Ablösekante anschließend ohne das abgelöste Bauteil geführt wird. Der Ablösetisch ist erfindungsgemäß entgegen der Förderrichtung verlagerbar.

Nach einem Vorschlag der Erfindung ist in Förderrichtung betrachtet der Ablösekante nachgeordnet eine Umlenkrolle für die Trägerfolie vorgesehen, die gemeinsam mit der Ablösekante verfahrbar ist, indem sie beispielsweise gemeinsam mit der Ablösekante an einem entsprechenden verfahrbaren Vorrichtungsträger befestigt ist.

Die Fixierungsmittel zum Fixieren der Trägerfolie sind nach einem weiteren Vorschlag der Erfindung von Klemmbacken gebildet, die beispielsweise pneumatisch betätigbar sind.

Die Fixierungseinrichtung für das Bauteil kann nach einem weiteren Vorschlag der Erfindung von einem Sauger gebildet sein.

Auch im Rahmen der erfindungsgemäßen Vorrichtung versteht es sich, dass auf der Trägerfolie insbesondere mehrere aufeinanderfolgende Bauteile, bei denen es sich insbesondere um RFID-Tags zum Einbringen in einen Reifen oder ein Reifenbauteil handeln kann, angeordnet sein können und durch taktweises Betreiben der Vorrichtung einzeln sukzessive von der Trägerfolie abgelöst werden.

Weitere Ausgestaltungen und Einzelheiten der Erfindung werden nachfolgend anhand der ein Ausführungsbeispiel darstellenden Zeichnung erläutert. Es zeigen:
- Figur 1: eine nach dem erfindungsgemäßen Verfahren arbeitende erfindungsgemäße Vorrichtung in einer schematischen Seitenansicht in einem ersten Zustand;
- Figur 2: die Vorrichtung gemäß Figur 1 in einem zweiten Zustand.

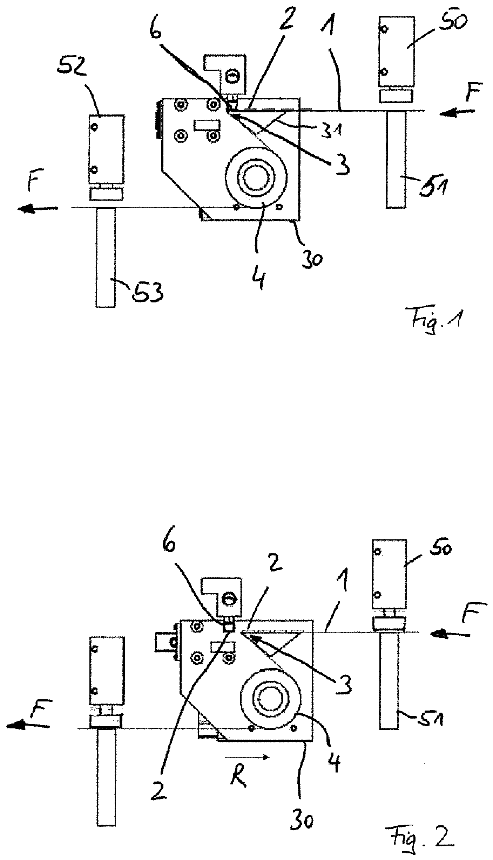

Aus den Figuren 1 und 2 ist eine Vorrichtung zum Ablösen von auf einer Trägerfolie 1 sukzessive oberseitig aufeinanderfolgend aufgebrachten und insoweit bereitgestellten Bauteilen 2 ersichtlich, bei denen es sich beispielsweise um gummierte bzw. mit Gummi laminierte RFID-Tags handeln kann, die zum Einbringen in einen Reifen oder ein Reifenbauteil vorgesehen sind.

Die mit den Bauteilen 2 versehene Trägerfolie 1 wird von nicht näher dargestellten Fördermitteln in einer Förderrichtung F zugeführt und über einen mit Bezugszeichen 31 gekennzeichneten Ablösetisch 31 geführt, der in der Seitenansicht gemäß Figur 1 den Querschnitt eines auf der Spitze stehenden Dreiecks aufweist, dessen Grundseite sich horizontal erstreckt und über welche die zugeführte Trägerfolie 1 mitsamt der darauf befindlichen Bauteile 2 verläuft.

Der in Förderrichtung F betrachtet hintere Randbereich des Ablösetisches 31 ist als Ablösekante 3 mit einem spitzen Winkel ausgeführt, über welchen die in Förderrichtung F geführte Trägerfolie deutlich über 90° umgelenkt wird. Im dargestellten Ausführungsbeispiel beträgt der Winkel der Ablösekante 3, der zugleich auch Umschlingungswinkel der darüber geführten Trägerfolie 1 ist, beispielsweise etwa 138°.

Anschließend läuft die über die Ablösekante 3 umgelenkte Trägerfolie 1 über eine unterhalb des Ablösetisches 31 angeordnete drehbare Umlenkrolle 4 und verläuft von dort im Wesentlichen horizontal parallel zu dem Verlauf der Trägerfolie 1 vor der Ablösekante 3 zu einer nicht näher dargestellten nachgeordneten Einrichtung.

Der Ablösetisch 31 mit Ablösekante 3 und die darunter angeordnete drehbare Umlenkrolle 4 sind gemeinsam an einem Vorrichtungsträger 30 befestigt, der in nachfolgend noch näher beschriebener Weise entgegen der Förderrichtung F der Trägerfolie 1 verlagerbar ist.

Aus der Darstellung der Figur 1 erkennt man ferner, dass oberhalb des Ablösetisches 31 ein Sauger 6 vorgesehen ist, der so positioniert ist, dass er über einem auf der Trägerfolie 1 befindlichen Bauteil 2 in der Position unmittelbar vor der Ablösekante 3 angeordnet ist.

Ferner sind in Förderrichtung F betrachtet vor dem Ablösetisch 31 und der Umlenkrolle 4 nachgeordnet Klemmbacken 50, 51, 52, 53 zugeordnet, wobei die Klemmbacken 50, 51 und 52, 53 jeweils ein zusammenwirkendes Paar bilden, die Klemmbacken 51, 53 hierbei ortsfest unterhalb des Verlaufs der Trägerfolie 1 positioniert sind und die Klemmbacken 50, 52 mit einem beweglichen, beispielsweise pneumatisch betätigten Klemmstempel oberhalb der Trägerfolie 1 und den jeweils zugeordneten Klemmbacken 51 bzw. 53 gegenüberliegend angeordnet sind.

Um die aufeinanderfolgend auf der Trägerfolie 1 bereitgestellten Bauteile 2 unter Beibehaltung der exakten Positionierung auf der Trägerfolie 1 von dieser abzulösen, wird die Trägerfolie 1 mitsamt dem in Förderrichtung F betrachtet ersten Bauteil 2 in der Förderrichtung F über den Ablösetisch 31 in Richtung der Ablösekante 3 gefördert, bis das Bauteil 2 exakt unterhalb des Saugers 6 in der entsprechenden vorbestimmten Position angekommen ist, was durch eine entsprechende, in der Zeichnung nicht näher dargestellte Erfassungseinrichtung, beispielsweise einen optischen Sensor, überwacht wird. Alternativ wird der Folienvorschub gestoppt, sobald das Bauteil durch die Erfassungseinrichtung in einem gewissen Bereich erkannt wird. Die genaue Positionierung zwischen Bauteil und Sauger erfolgt dann durch das Verfahren des Saugers auf die exakte Position über dem Bauteil.

Sobald dieses Bauteil 2 in der gewünschten Position unterhalb des Saugers 6, wie in Figur 1 dargestellt, angekommen ist, wird die Förderung der Trägerfolie 1 in Förderrichtung F angehalten und die Trägerfolie 1 durch Ausfahren der Klemmstempel 50, 52 vor und nach dem Ablösetisch 31 fixiert, sodass die Bahnspannung der Trägerfolie 1 fixiert und aufrechterhalten wird, siehe Figur 2.

Gleichzeitig wird der Sauger 6 mit Unterdruck beaufschlagt und saugt das benachbarte und noch auf der Trägerfolie 1 befindliche Bauteil 2 oberseitig an, sodass es seine Position nicht verlassen kann.

Im Anschluss wird der den Ablösetisch 31 und die Umlenkrolle 4 gemeinsam tragende Vorrichtungsträger 30 entgegen der Förderrichtung F in Pfeilrichtung R um einen gewissen Längenabschnitt, der mindestens der Länge des Bauteils 2 entspricht, verlagert, wobei die Ablösekante 3 mitsamt der über diese verlaufenden Trägerfolie 1 unterhalb des am Sauger 6 fixierten Bauteiles 2 abgezogen wird. Dabei verändert der Sauger 6 mitsamt dem daran fixierten Bauteil 2 die Position nicht, sondern das Bauteil 2 wird während dieses Abziehvorgangs mit dem Sauger 6 auf Position gehalten.

Anschließend kann das exakt lagefixierte Bauteil 2 vom Sauger 6 zum Beispiel über eine entsprechende, nicht dargestellte Führung mittels eines Roboters oder einer Lineareinheit an eine Nachfolgeeinrichtung übergeben oder direkt an den Einbauort, beispielsweise einen Reifen oder ein Reifenbauteil mit höchster Positionierungsgenauigkeit appliziert werden.

Nach Abschluss der Übergabe bzw. Applikation des Bauteils 2 vom Sauger 6 kehrt diese in die Ursprungsposition gemäß Figuren 1 bzw. 2 zurück und der Vorrichtungsträger 30 fährt entgegen Pfeilrichtung R, d. h. in Förderrichtung F wieder in seine Ausgangslage gemäß Figur 1 zurück. Ebenso wird die Klemmung der Trägerfolie 1 zwischen den Klemmbacken 50, 51, 52, 53 wieder aufgehoben, woraufhin der Vorschub der Trägerfolie 1 mitsamt des nächsten darauf befindlichen Bauteiles 2 in Förderrichtung F und die anschließende Vereinzelung des Bauteils 2 in der bereits beschriebenen Weise von neuem beginnen kann.

### Bezugszeichenliste:

- 1:: Trägerfolie
- 2:: Bauteil
- 3:: Ablösekante
- 4:: Umlenkrolle
- 6:: Sauger
- 30:: Vorrichtungsträger
- 31:: Ablösetisch
- 50:: bewegliche Klemmbacke
- 51:: starre Klemmbacke
- 52:: bewegliche Klemmbacke
- 53:: starre Klemmbacke

- F:: Förderrichtung
- R:: Verlagerungsrichtung

## Patentansprüche

1. Verfahren zum Ablösen eines auf einer Trägerfolie (1) bereitgestellten Bauteils (2) von der Trägerfolie (1), bei welchem die Trägerfolie (1) mit dem Bauteil (2) über eine Ablösekante (3) in einem Winkel von mehr als 90° in einer Förderrichtung (F) gefördert wird, wobei das Bauteil (2) von der Trägerfolie (1) abgelöst und getrennt von der Trägerfolie (1) abgeführt wird, **dadurch gekennzeichnet, dass** die Förderung der Trägerfolie (1) in einer vorbestimmten Position des auf der Trägerfolie (1) befindlichen Bauteils (2) vor der Ablösekante (3) gestoppt und die Trägerfolie (1) vor und hinter der Ablösekante (3) fixiert wird und anschließend die Ablösekante (3) entgegen der Förderrichtung (F) der Trägerfolie (1) verlagert wird, während das Bauteil (2) in seiner Position fixiert und von der Trägerfolie (1) abgelöst wird.

2. Verfahren nach Anspruch 1, **dadurch gekennzeichnet, dass** die Ablösekante (3) um einen Längenabschnitt entgegen der Förderrichtung (F) verlagert wird, der mindestens der Länge des Bauteiles (2) entspricht.

3. Verfahren nach Anspruch 1 oder 2, **dadurch gekennzeichnet, dass** die Trägerfolie (1) anschließend an die Ablösekante (3) über eine Umlenkrolle (4) geführt wird, die gemeinsam mit der Ablösekante (3) verlagert wird und die Trägerfolie (1) hinter der Umlenkrolle (4) fixiert wird.

4. Verfahren nach Anspruch 3, **dadurch gekennzeichnet, dass** die Trägerfolie (1) von der Umlenkrolle (4) parallel zu dem Verlauf der Trägerfolie (1) vor der Ablösekante (3) geführt wird.

5. Verfahren nach einem der Ansprüche 1 bis 4, **dadurch gekennzeichnet, dass** die Fixierung der Trägerfolie (1) durch Klemmen zwischen Klemmbacken (50, 51, 52, 53) bewirkt wird.

6. Verfahren nach einem der Ansprüche 1 bis 5, **dadurch gekennzeichnet, dass** eine Vielzahl von Bauteilen (2) aufeinanderfolgend auf der Trägerfolie (1) bereitgestellt werden und nach dem Ablösen eines Bauteils (2) die Fixierung der Trägerfolie (1) aufgehoben, die Ablösekante (3) in Förderrichtung (F) vorverlagert wird und die Trägerfolie (1) erneut in Förderrichtung (F) gefördert wird.

7. Verfahren nach einem der Ansprüche 1 bis 6, **dadurch gekennzeichnet, dass** das Bauteil (2) mittels eines Saugers (6) in seiner Position fixiert wird.

8. Verfahren nach einem der Ansprüche 1 bis 7, **dadurch gekennzeichnet, dass** das Bauteil (2) als RFID-Tag ausgebildet ist und dazu bestimmt ist, in einen Reifen eingebracht zu werden.

9. Vorrichtung zum Ablösen eines auf einer Trägerfolie (1) bereitgestellten Bauteils (2) von der Trägerfolie (1), umfassend Fördermittel zum Zuführen der Trägerfolie (1) mit dem darauf befindlichen Bauteil (2) in einer Förderrichtung (F) und eine Ablösekante (3) mit einem Winkel von mehr als 90°, über die die Trägerfolie (1) von den Fördermitteln in der Förderrichtung (F) führbar ist, um das Bauteil (2) von der Trägerfolie (1) abzulösen, **dadurch gekennzeichnet, dass** eine Erfassungseinrichtung zum Erfassen einer vorbestimmbaren Position des auf der Trägerfolie (1) befindlichen Bauteils (2) vor der Ablösekante (3) vorgesehen ist und vor sowie hinter der Ablösekante (3) Fixierungsmittel zum Fixieren der Trägerfolie (1) angeordnet sind, der vorbestimmbaren Position eine Fixierungseinrichtung zur Fixierung des Bauteils (2) zugeordnet ist und die Ablösekante (3) entgegen der Förderrichtung (F) verlagerbar ist, dergestalt, dass bei Erfassung der vorbestimmbaren Position des Bauteiles (2) mittels der Erfassungseinrichtung die Fördermittel anhaltbar, die Trägerfolie (1) und das Bauteil (2) fixierbar und die Ablösekante (3) entgegen der Förderrichtung (F) verlagerbar ist, um das Bauteil (2) von der Trägerfolie (1) abzulösen.

10. Vorrichtung nach Anspruch 9, **dadurch gekennzeichnet, dass** in Förderrichtung (F) betrachtet der Ablösekante (3) nachgeordnet eine Umlenkrolle (4) für die Trägerfolie (1) vorgesehen ist, die gemeinsam mit der Ablösekante (3) verfahrbar ist.

11. Vorrichtung nach Anspruch 9 oder 10, **dadurch gekennzeichnet, dass** die Fixierungsmittel zum Fixieren der Trägerfolie (1) von Klemmbacken (50, 51, 52, 53) gebildet sind.

12. Vorrichtung nach einem der Ansprüche 9 bis 11, **dadurch gekennzeichnet, dass** die Fixierungseinrichtung für das Bauteil (2) von einem Sauger (6) gebildet ist.

13. Vorrichtung nach einem der Ansprüche 9 bis 12, **dadurch gekennzeichnet, dass** das Bauteil (2) als RFID-Tag ausgebildet ist und dazu bestimmt ist, in einen Reifen eingebracht zu werden.
